Europäisches Patentamt

European Patent Office

Office européen des brevets

(19)

(11) Numéro de publication: **0 005 395**
**B1**

(12) **FASCICULE DE BREVET EUROPEEN**

(45) Date de publication du fascicule du brevet: **09.02.83**

(51) Int. Cl.³: **F 16 K 31/06, F 16 K 1/44**

(21) Numéro de dépôt: **79400264.2**

(22) Date de dépôt: **25.04.79**

(54) **Dispositif de réglage du petit débit d'une électrovalve pour appareils du genre chaudière à gaz.**

(30) Priorité: **08.05.78 FR 7813465**

(43) Date de publication de la demande:
**14.11.79 Bulletin 79/23**

(45) Mention de la délivrance du brevet:
**09.02.83 Bulletin 83/6**

(84) Etats contractants désignés:
**BE DE GB IT NL**

(56) Documents cités:
**FR - A - 2 110 603**
**FR - A - 2 249 275**

(73) Titulaire: **SAUNIER DUVAL EAU CHAUDE
CHAUFFAGE S.D.E.C.C. - Société anonyme
6, rue Lavoisier
F-93103 Montreuil (FR)**

(72) Inventeur: **Charron, Jean-Claude
14, avenue du Lac
F-94100 Saint Maur (FR)**
Inventeur: **Mulsant, Philippe
13, rue du 8 mai 1945
F-94350 Villiers sur Marne (FR)**

(74) Mandataire: **Lhuillier, René
SAUNIER DUVAL EAU CHAUDE CHAUFFAGE -
S.D.E.C.C. 6, rue Lavoisier
F-93103 Montreuil (FR)**

Courier Press, Leamington Spa, England.

## Dispositif de réglage du petit débit d'une électrovalve pour appareils du genre chaudière à gaz.

L'invention se rapporte à un dispositif de réglage du petit débit d'une électrovalve à ouverture progressive pour la commande et la régulation de l'arrivée du gaz à un brûleur d'appareils du genre chaudière à gaz.

Les électrovalves de type connu utilisées pour la commande de l'arrivée du gaz à un brûleur comportent de façon habituelle un clapet obturateur associé à un noyau ou une palette magnétique mobile. La commande de l'ouverture ou de la fermeture du clapet est assurée par l'attraction du noyau mobile ou de la palette qui vient brusquement au collage sur un noyau fixe lorsque l'induction fournie par la bobine atteint une valeur suffisante. Lorsque l'on veut utiliser ce type connu d'électrovalve pour asservir l'arrivée du gaz au brûleur d'une chaudière à gaz, en fonction de la température de l'eau chaude fournie par ladite chaudière ou de tout autre agent extérieur, en alimentant par exemple la bobine de l'électrovalve en série avec un contact dont la position ouverte ou fermée est elle-même associée à la température de l'eau, un obtient obligatoirement un mode de fonctionnement de brûleur en "tout ou rien".

Ce mode de fonctionnement en "tout ou rien" d'un brûleur, présente comme on le sait, divers inconvénients, notamment une mauvaise régulation de la température de l'eau fournie par la chaudière, cette température oscillant entre deux valeurs présentant un écart important. Lorsque la puissance demandée par l'installation de chauffage est faible par rapport à la puissance de la chaudière un obtient une fréquence élevée d'allumage et d'extinction du brûleur, et le fonctionnement de la chaudière devient désagréable car l'allumage d'un brûleur est toujours accompagné de bruit. Pour remédier à ces inconvénients d'une commande en "tout ou rien" d'un brûleur on a déjà proposé l'utilisation d'une combinaison de deux électrovalves de type connu présentant des pertes de charge différentes et commandées par un circuit comportant deux contacts à séquence asservis à deux températures légèrement décalées autour de la valeur choisie ou par un circuit fournissant un courant ou une tension proportionnel à l'écart entre la température affichée et la température réelle de l'eau, une des électrovalves étant réglée pour fonctionner à un courant ou à une tension légèrement différent de ceux de l'autre; mais toutes ces combinaisons connues présentent l'inconvénient de nécessiter deux électrovalves: ce qui, d'une part est déjà coûteux et ce qui, d'autre part, dans le cas d'une commande par courant ou tension proportionnel à l'écart de la température, — commande qui ne peut guère se faire que par l'utilisation de circuits électroniques, — nécessite une puissance plus élevée entrainant un prix également plus élevé.

Ces dispositifs connus, hormis les difficultés de réglage qu'ils présentent, ne permettent pas un réglage progressif du débit en fonction de l'intensité puisqu'ils n'offrent que deux valeurs d'ouverture différentes: une ouverture à petit débit, puis à partir d'un seuil d'intensité plus élevé une ouverture franche à grand débit.

On connait dans le FR—A—2.110.603 une électrovalve à ouverture progressive pour la commande et la régulation de l'arrivée du gaz à un brûleur comprenant deux clapets de sections de passage différentes et un électro-aimant à noyau plongeur unique assurant la levée et la retombée successives desdits clapets. L'alimentation en gaz à petit débit s'effectue par un un conduit dérivé dont la section est réglable, prévu dans le corps de valve.

La présente invention se rapporte à un dispositif de réglage du petit débit adaptable aux types d'électrovalves à ouverture progressive décrites dans le FR—A—2.249 275 au nom de la demanderesse. Ces électrovalves comprennent une tige axiale à un seul noyau mobile qui porte un ensemble obturateur à deux clapets concentriques, le clapet petit débit étant directement solidaire du noyau mobile de la bobine et comportant un prolongement cylindrique qui s'engage dans un orifice central du clapet grand débit et qui porte un système de butée et de plateau d'entrainement grâce auquel il peut, à partir d'un seuil d'intensité appliqué à la bobine, ouvrir ce clapet grand débit pour que l'orifice de passage du gaz soit progressif et asservi aux variations d'intensité. Suivant l'invention pour permettre le réglage du petit débit, le clapet grand débit se prolonge par un tube creux qui traverse toute la hauteur de la ou des plusieurs chambres de départ du gaz et qui canalise le gaz à petit débit, libéré de la chambre supérieure d'admission par la levée du clapet petit débit, vers une chambre inférieure communiquant avec lesdites chambres de départ par un orifice de passage réglable, lequel constitue ledit système complémentaire de réglage.

Les caractéristiques particulières ainsi que les avantages de ce dispositif de réglage apparaîtront plus clairement à la lecture de la description suivante d'une forme de réalisation prise à titre d'exemple.

On se réfère aux dessins annexés qui représentent:

— figure 1: une vue en coupe axiale du dispositif de réglage conforme à l'invention.

— figure 2: une vue en coupe axiale montrant le passage du gaz à faible débit.

— figures 3 et 4: deux vues de détails du dispositif de réglage.

— figure 5: une vue en coupe axiale d'une électrovalve bi-gaz munie du dispositif de réglage conforme à l'invention.

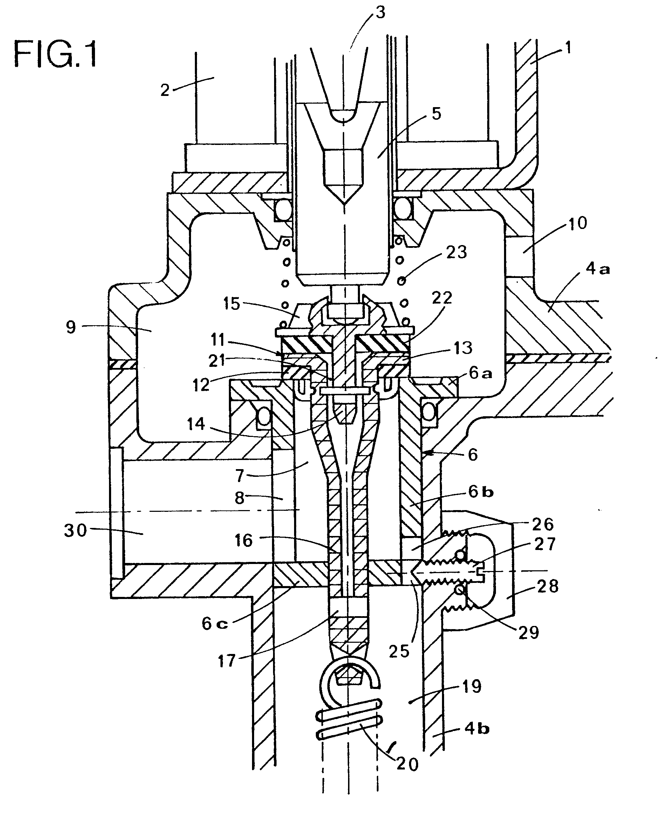

En se reportant tout d'abord à la figure 1, ou voit que l'électrovalve comporte une armature 1 qui entoure la bobine d'induction 2 au centre de laquelle se trouve un noyau fixe 3 bridé à l'armature.

Cet ensemble 1, 2 et 3 formant l'électrovalve est fixé sur la couvercle supérieur 4a du corps de valve; lui-même appliqué sur le boîtier inférieur 4b. Au droit du noyau fixe 3, le couvercle 4a est percé d'un orifice central à l'intérieur duquel se déplace le noyau mobile 5. Le boîtier 4b comporte, dans le prolongement du noyau 3, un manchon cylindrique désigné dans son ensemble par la référence 6. Ce manchon cylindrique se compose de trois parties: — une partie supérieure 6a formant coupelle d'appui sur le boîtier et servant de siège à un clapet grand débit, — une partie intermédiaire cylindrique 6b délimitant une chambre de départ gaz 7 en communication par une ouverture 8 avec la canalisation de départ 30 du gaz vers les brûleurs et une partie inférieure 6c en forme de disque à orifice central qui sert au guidage du clapet grand débit. La chambre supérieure d'admission 9, entre le couvercle supérieur 4a et la siège de clapet grand débit est soumise à la pression du gaz admis en 10. Au-dessous du disque 6c se trouve une chambre inférieure 19 en communication avec la chambre de départ gaz 7 comme on le verra plus loin.

Un ensemble obturateur désigné par la référence 11 se compose d'un clapet grand débit 13 et d'un clapet coaxial petit débit 15. Le clapet grand débit 13 muni de son habituelle rondelle d'étanchéité 12 ferme l'orifice inférieur de la chambre d'admission gaz 9 et forme le siège du clapet petit débit 15. Il est en outre percé d'un orifice central à l'intérieur duquel coulisse une tige axiale 14 solidaire du clapet petit débit 15 qui est lui-même solidaire du noyau mobile 5 de l'électrovalve. La tige 14 est d'un diamètre inférieur à l'orifice central du clapet obturateur 11, laissant ainsi un jeu pour un passage suffisant du gaz par l'orifice annulaire 21 ainsi réalisé. Une petite rondelle d'obturation 22 fixée sous le clapet petit débit 15 ferme cet orifice 21 quand ledit clapet est appliqué contre le clapet grand débit 13 grâce au ressort 23.

La partie inférieure du clapet grand débit 13 se prolonge sous forme d'un tube creux 16 sur toute la hauteur de la chambre de départ 7, tube qui traverse l'orifice du disque 6c, et dont l'extrémité inférieure au-dessous de ce disque est percée d'orifices 17. Ainsi le gaz à faible débit passe de la chambre supérieure d'admission 9 dans le tube creux 16 lar l'intermédiaire de l'orifice annulaire 21, puis dans la chambre inférieure 19. L'extrémité inférieure du tube 16 est reliée par un ressort 20 à un système de réglage non représenté qui permet de modifier l'effort de rappel en fonction de la nature et de la pression du gaz utilisé.

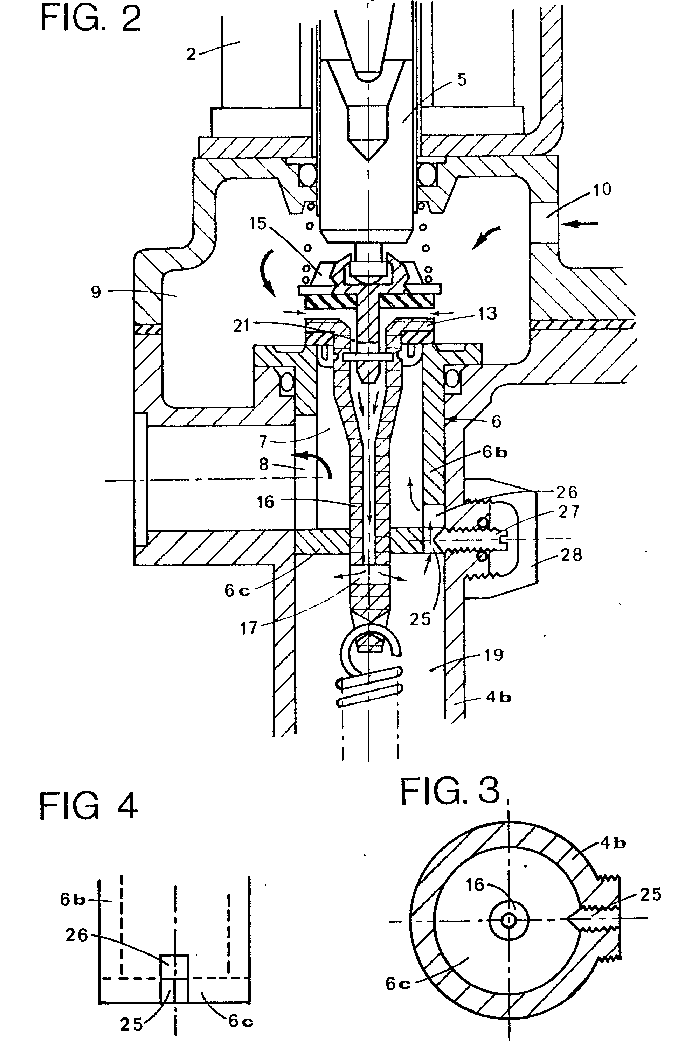

La partie extérieure du disque 6c et la partie inférieure du cylindre intermédiaire 6b du manchon 6 sont l'un et l'autre percés d'un orifice portant respectivement les références 25 et 26 (figure 3 et 4) qui communiquent entre eux pour le passage du gaz entre la chambre inférieure 19 et la chambre de départ 7. Une vis pointeau 27 est montée dans le boîtier 4b au niveau du disque 6c de façon à pouvoir régler de l'extérieur la section de passage du gaz dans l'ouverture 25. Un cache 28 est placé autour de la tête de la vis 27 et un joint 29 assure l'étanchéité entre la vis 27 et le boîtier 4b.

Lorsqu'une certaine intensité est appliquée aux bornes de la bobine 2, l'effort exercé par l'électroaimant sur le noyau mobile 5 est suffisant pour assurer la levée du clapet petit débit 15 (figure 2). La rondelle d'obturation 22 s'est donc décollée de son siège. Le gaz admis dans la chambre d'admission 9 par l'ouverture 10 débouche dans la chambre inférieure 19 en passant par l'orifice annulaire 21, le tube creux 16 et les orifices 17. Ensuite le gaz passant par les orifices 25 et 26 remplit la chambre de départ 7 et se dirige vers les brûleurs par l'ouverture 8, ce qui donne par conséquent un débit minimum déterminé. Si on désire modifier le débit minimum de l'appareil, on enlève le cache 28, on tourne à l'aide d'un tournevis la vis 27 dans un sens ou dans l'autre afin de diminuer ou d'augmenter la section de passage du gaz dans l'orifice 25.

Suivant une variante de l'invention, il est possible de prolonger le manchon cylindrique 6, au-dessous du disque 6c par une autre partie cylindrique qui supporte directement le dispositif de réglage de la tension du ressort 20 afin de faciliter les opérations de montage des différents éléments de l'électrovalve.

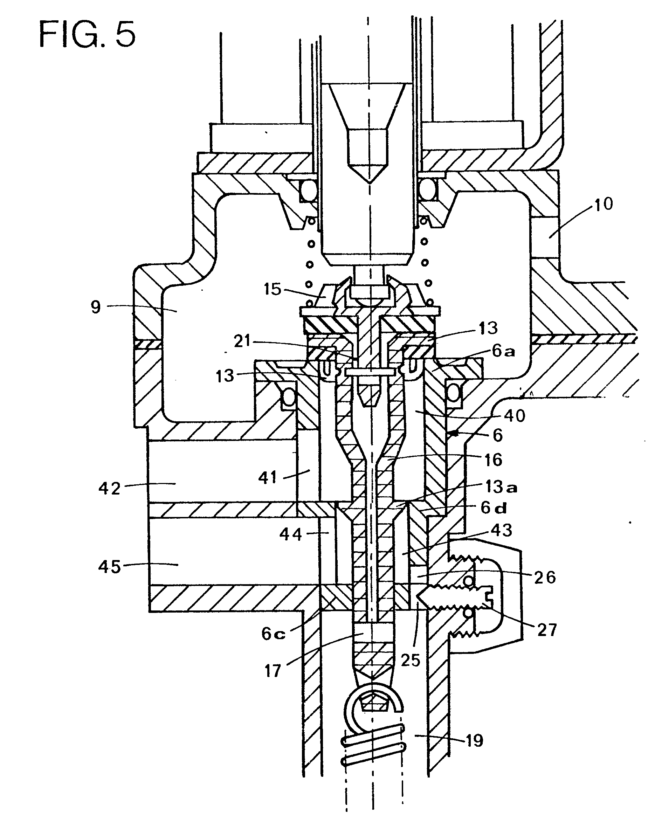

A la figure 5, on a représenté une électrovalve bi-gaz munie du dispositif de réglage du débit minimum. Dans ce cas, la partie intermédiaire cylindrique 6b du manchon 6 comporte un autre siège de clapet grand débit 6d dont le diamètre intérieur est plus petit que celui du siège 6a du clapet grand débit 13. Le manchon cylindrique 6 délimite: — une première chambre de départ 40 entre les deux sièges 6a et 6d en communication par une ouverture 41 avec la première canalisation 42 de départ du gaz et — une seconde chambre de départ 43 entre le siège de clapet 6d et la disque 6c en communication par une ouverture 44 à la seconde canalisation 45 de départ du gaz. Suivant le type de gaz distribué, gaz de ville, gaz naturel ou butane-propane, les deux canalisations 42, 45 peuvent être laissées ouvertes ou bien la canalisation 42 peut être fermée par n'importe quel moyen.

La partie inférieure du clapet grand débit 13 se prolonge également par un tube creux 16 sur toute la hauteur des chambres 40—43, tube qui traverse l'orifice du disque 6c, et dont l'extrémité inférieure au-dessous de ce disque est percée d'orifices 17.

Le tube 16 comporte au niveau du siège de clapet 6d un épaulement circulaire 13a jouant le rôle d'un second clapet grand débit.

La partie extérieure du disque 6c et la partie inférieure du manchon 6 au-dessous du second siège de clapet grand débit 6d sont l'un et l'autre percés d'un orifice portant respectivement les références 25 et 26.

Ainsi le gaz à faible débit admis dans la chambre 9 passe dans le tube creux 16 par l'intermédiaire de l'orifice annulaire 21, puis dans la chambre inférieure 19. Ensuite le gaz passant par les orifices 25 et 26 remplit la seconde chambre de départ 43 et se dirige vers les brûleurs par l'ouverture 44 et la canalisation 45 qui est toujours ouverte quelque soit le type de gaz distribué. La vis pointeau 27 permet de modifier la section de passage du gaz dans l'orifice 25.

Ce dispositif de réglage permet donc de pouvoir modifier le débit minimum de l'électrovalve suivant la puissance minimum que l'on désire obtenir ou suivant le type de gaz distribué, sans changer les sièges de clapet ou les parties mobiles ou sans nécessiter le remplacement complet de l'électrovalve.

L'invention ne se limite pas à la forme de réalisation précedemment décrite mais en englobe au contraire toutes les variantes.

**Revendications**

1. Dispositif de réglage du petit débit de gaz pour appareils du genre chauffe-eau, chauffe-bains ou chaudière domestique dont la commande et le contrôle de l'arrivée du gaz au brûleur est assuré par une électrovalve comportant une bobine d'induction (2) et un noyau mobile (5) entraînant dans son mouvement un ensemble obturateur (11) qui commande un passage de gaz d'une chambre supérieure d'admission (9) vers au moins une chambre de départ (7, 40 et 43) du gaz au brûleur, lequel ensemble obturateur (11) étant constitué d'un clapet grand débit (13) formant le siège d'un clapet petit débit (15) qui détermine le passage du gaz à petit débit, ledit passage étant réglable par l'intermédiaire d'un système complémentaire de réglage (25, 26, 27) manoeuvrable de l'extérieur caractérisé par le fait que le clapet grand débit (13) se prolonge par un tube creux (16) qui traverse toute la hauteur de la ou des chambres de départ (7, 40 et 43) du gaz et qui canalise le gaz à petit débit, libéré de la chambre supérieure d'admission (9) par la levée du clapet petit débit (15), vers une chambre inférieure (19) communiquant avec lesdites chambres de départ par un orifice de passage réglable (25, 26), lequel constitue ledit système complémentaire de réglage.

2. Dispositif selon la revendication 1, caractérisé par le fait que l'orifice de passage réglable comporte une vis de réglage (27) du genre vis pointeau, pouvant obturer un orifice de passage (25) prévu sur un disque (6c) séparant la chambre inférieure (19) de la chambre de départ (7, 43).

3. Dispositif selon la revendication 2,

caractérisé par le fait que l'orifice de passage (25) coopère avec un orifice (26) prévu sur un manchon (6) délimitant la chambre de départ (7, 43).

4. Dispositif selon la revendication 3, caractérisé par le fait que le manchon (6) est constitué d'une seule pièce se terminant à la partie supérieure par une coupelle (6a) servant de siège à un clapet unique grand débit (13), se terminant à la partie inférieure par le disque (6c) portant l'orifice de passage (25) et dont la partie cylindrique intermédiaire (6b) comporte une ouverture (8) de départ du gaz.

5. Dispositif selon la revendication 3, caractérisé par le fait que le manchon (6) est constitué d'une seule pièce se terminant à sa partie supérieure par une coupelle (6a) servant de siège à un premier clapet grand débit (13), se terminant à la partie inférieure par le disque (6c) portant l'orifice de passage (25) et dont la partie cylindrique intermédiaire comporte deux ouvertures séparées (41, 44) de départ du gaz de part et d'autre d'un rebord circulaire (6d) servant de siège à un second clapet grand débit (13a) porté par le tube creux (16).

6. Dispositif selon la revendication 2 caractérisé par le fait que l'extrémité inférieure du tube creux (16), au-dessous du disque (6c) comporte des petits orifices (17).

**Patentansprüche**

1. Vorrichtung zum Regeln kleiner Gasdurchsatzmengen für Heizgeräte wie Durchlauferhitzer, Warmwasserbereiter oder Hauschaltsheizkesseln, deren Betätigung und Steuerung der Gaszufuhr zum Brenner mittels eines Magnetventils erfolgt, das eine Induktionsspule (2) und einen beweglichen Kern (5) aufweist, der bei seiner Bewegung ein Verschlußorgan (11) mitnimmt, das einen Gasdurchlaß von einer oberen Einlaßkammer (9) zu wenigstens einer Auslaßkammer (7, 40 und 43) des Gasbrenners steuert und aus einer Klappe (13) mit großem Durchsatz besteht, die den Sitz einer Klappe (15) mit kleinem Durchsatz bildet, welche den Gasdurchgang kleiner Durchsatzmenge festlegt, wobei dieser Durchgang durch ein ergänzendes, von außen bedienbares Regelsystem (25, 26, 27) regelbar ist, dadurch gekennzeichnet, daß die Klappe (13) mit großem Durchsatz in ein Hohlrohr (16) verlängert ist, das sich über die gesamte Höhe der Gasauslaßkammer oder -kammern (7, 40 und 43) erstreckt und das Gas kleinen Durchsatzes, das von der oberen Einlaßkammer (9) durch den Hub der Klappe (15) mit kleinem Durchsatz freigesetzt wird, zu einer unteren Kammer (19) führt, die mit den Auslaßkammern durch eine regelbare Durchtrittsöffnung (25, 26) verbunden ist, die das ergänzende Regelsystem bildet.

2. Vorrichtung nach Anspruch 1, dadurch gekennzeichnet, daß die regelbare Durchtrittsöffnung eine Justierschraube (27) in Art einer Madenschraube aufweist, mit der eine Durchtrittsöffnung (25) in einer Scheibe (6c) verschließbar ist, die die untere Kammer (19) von der Auslaßkammer (7, 43) trennt.

3. Vorrichtung nach Anspruch 2, dadurch gekennzeichnet, daß die Durchtrittsöffnung (25) mit einer Öffnung (26) auf einer die Auslaßkammer (7, 43) begrenzenden Hülse (6) zusammenwirkt.

4. Vorrichtung nach Anspruch 3, dadurch gekennzeichnet, daß die Hülse (6) aus einem einzigen Stück besteht, am oberen Teil in einer Schale (6a) endet, die als Sitzt für eine einzige Klappe (13) für großen Durchsatz dient, am unteren Teil durch eine Scheibe (6c) begrenzt ist, die die Durchtrittsöffnung (25) aufweist, und deren zylindrischer Zwischenteil (6b) eine Gasauslaßöffnung (8) besitzt.

5. Vorrichtung nach Anspruch 3, dadurch gekennzeichnet, daß die Hülse (6) aus einem einzigen Stück besteht, die an ihrem oberen Teil in einer Schale (6a) endet, die als Sitz einer ersten Klappe (13) für großen Durchsatz dient, an ihrem unteren Teil in der Scheibe (6c) endet, die die Durchtrittsöffnung (25) aufweist, und deren zylindrischer Zwischenteil zwei getrennte Öffnungen (41, 44) für den Gasauslaß sowie einen runden Sims (6d) aufweist, der als Sitz einer zweiten Klappe (13a) für großen Durchsatz dient, die an dem Hohlrohr (16) sitzt.

6. Vorrichtung nach Anspruch 2, dadurch gekennzeichnet, daß das untere Ende des Hohlrohres (16) unterhalb der Scheibe (6c) kleine Öffnungen (17) aufweist.

**Claims**

1. Device for regulating the low flow rate of gas for appliances of the water heater, bath heater or domestic boiler type, in which the admission of the gas into the burner is governed and controlled by an electrovalve comprising an induction coil (2) and a moving core (5) carrying in its movement a shut-off unit (11), which governs the passage of gas from an upper admission chamber (9) towards at least one exit chamber (7, 40 and 43) for the gas passing to the burner, which shut-off unit (11) consists of a high flow-rate valve (13) forming the seat of a low flow-rate valve (15), which determines the passage of the gas at a low flow rate, the said passage being adjustable via a complementary regulating system (25, 26, 27) which can be controlled from outside, characterised in that the high flow-rate valve (13) is extended by a hollow tube (16) which passes through the whole height of the exit chamber or chambers (7, 40 and 43) for the gas, and which channels the gas at a low flow rate, released from the upper admission chamber (9) by the lifting of the low flow-rate valve (15), towards a lower chamber (19) communicating with the said exit chambers by means of an adjustable passage orifice (25, 26), which constitutes the said complementary regulating system.

2. Device according to Claim 1, characterised in that the adjustable passage orifice includes an adjusting screw (27) of the needle-screw type, which is capable of shutting off a passage orifice (25) provided in a disc (6c) separating the lower chamber (19) from the exit chamber (7, 43).

3. Device according to Claim 2, characterised in that the passage orifice (25) cooperates with an orifice (26) provided in a sleeve (6) delimiting the exit chamber (7, 43).

4. Device according to Claim 3, characterised in that the sleeve (6) consists of a single piece terminating at the upper part in a cup (6a) serving as a seat for a single high flow-rate valve (13), terminating at the lower part in the disc (6c) possessing the passage orifice (25), and having in its intermediate cylindrical part (6b) an exit opening (8) for the gas.

5. Device according to Claim 3, characterised in that the sleeve (6) consists of a single piece terminating at its upper part in a cup (6a) serving as a seat for a first high flow-rate valve (13), terminating at the lower part in the disc (6c) possessing the passage orifice (25), and having in its intermediate cylindrical part two separate exit openings (41, 44) for the gas, on either side of a circular rim (6d) serving as a seat for a second high flow-rate valve (13a) carried by the hollow tube (16).

6. Device according to Claim 2, characterised in that the lower end of the hollow tube (16), below the disc (6c), possesses small orifices (17).

FIG.1

FIG. 2

0 005 395

FIG 4

FIG. 3

FIG. 5

0 005 395

3